# EUROPEAN PATENT APPLICATION

(11) **EP 4 270 818 A1**
(43) Date of publication of application: **01.11.2023**
(21) Application number: 22170904.1
(22) Date of filing: 29.04.2022
(51) Int. Cl.: H04B 7/185, H04W 56/00

(54) **FREQUENCY PRE-COMPENSATION FOR RANDOM ACCESS PREAMBLE TRANSMISSION**

(71) Applicant: Nokia Technologies Oy, 02610 Espoo (FI)
(72) Inventor: MANOLAKIS, Konstantinos, Munich (DE); BARBU, Oana-Elena, Aalborg (DK); FREDERIKSEN, Frank, Klarup (DK); MARCONE, Alessio, Munich (DE); AHMADIAN TEHRANI, Amir Mehdi, Munich (DE)
(74) Representative: Nokia EPO representatives

(57) **Abstract**

Various example embodiments may relate to relate to transmission of random access preambles in non-terrestrial networks. An apparatus may estimate a location of the apparatus; determine a quality of the estimated location; determine, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network; and transmit a plurality of random access preambles corresponding to the plurality of frequency pre-compensation values.

## Description

### TECHNICAL FIELD

Various example embodiments generally relate to the field of wireless communications. Some example embodiments relate to transmission of random access preambles in non-terrestrial networks.

### BACKGROUND

Various wireless communication systems, for example 3GPP 5G New Radio (NR), may provide non-terrestrial network support for example by including access nodes in satellites or by relaying signals via satellites. A device such as for example a user equipment (UE) may be provided with positioning capability, for example by means of an integrated global navigation satellite system (GNSS) device. Due to rapid movement of the serving satellite or other non-terrestrial platform, signals transmitted by a terrestrial device may experience a Doppler shift and therefore frequency pre-compensation of transmitted signals may be applied, for example when transmitting a random access preamble for requesting access to the non-terrestrial network.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter. Example embodiments enable to improve reliability of random access to a non-terrestrial network and thereby to speed up the random access process. These benefits may be achieved by the features of the independent claims. Further implementation forms are provided in the dependent claims, the description, and the drawings.

According to a first aspect, an apparatus is disclosed. The apparatus may comprise: means for estimating a location of the apparatus; means for determining a quality of the estimated location; means for determining, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network; and means for transmitting a plurality of random access preambles corresponding to the plurality of frequency pre-compensation values.

According to an example embodiment of the first aspect, the apparatus may comprise: means for determining, based on the location of the apparatus, a single frequency pre-compensation value and transmitting a single random access preamble corresponding to the single frequency pre-compensation value, in response to determining that the quality of the estimated location does not meet the condition for applying multiple frequency pre-compensation values for accessing the non-terrestrial network.

According to an example embodiment of the first aspect, the apparatus may comprise: means for estimating the location of the apparatus based on at least one satellite positioning signal and/or at least one terrestrial positioning signal.

According to an example embodiment of the first aspect, the at least one satellite positioning signal may be received from a serving satellite of the non-terrestrial network and/or at least one other satellite.

According to an example embodiment of the first aspect, the apparatus may comprise: means for determining the quality of the estimated location based on downlink information received from the serving satellite and/or measurements of at least one downlink signal received from the serving satellite.

According to an example embodiment of the first aspect, the apparatus may comprise: means for determining the quality of the estimated location based on at least one of: variance of time information, frequency information, or location information determined based on the at least one satellite positioning signal; a number of satellites used for determining the time information, frequency information, or the location information; variance of the downlink information; or downlink radio channel conditions associated with the at least one downlink signal.

According to an example embodiment of the first aspect, the apparatus may comprise: means for transmitting a subsequent random access preamble of the plurality of random access preambles, in response to not receiving a random access response within a predetermined time period from transmission of a previous random access preamble.

According to an example embodiment of the first aspect, the apparatus may comprise: means for transmitting the plurality of random access preambles before an expected reception time of a random access response.

According to an example embodiment of the first aspect, at least two of the plurality of random access preambles may overlap in time and/or the plurality of random access preambles may comprise same preamble sequence.

According to an example embodiment of the first aspect, the condition for applying the plurality of frequency pre-compensation values for accessing the non-terrestrial network may comprise the quality of the estimated location being above or equal to a first threshold, and the apparatus may comprise: means for determining a reference frequency offset based on a signal received from the non-terrestrial network when the quality of the estimated location is above or equal to a second threshold; means for determining a current frequency offset based on a signal received from the non-terrestrial network when the quality of the estimated location is below or equal to the first threshold; means for determining a current Doppler shift based on a subtraction of the reference frequency offset and the current frequency offset; and means for determining the plurality of frequency pre-compensation values based on the current Doppler shift.

According to an example embodiment of the first aspect, the first threshold may be equal to the second threshold or the first threshold may be lower than the second threshold.

According to an example embodiment of the first aspect, the apparatus may comprise: means for determining a first frequency pre-compensation value based on the location of the apparatus; and means for selecting the plurality of frequency pre-compensation values from an interval between the first frequency pre-compensation value and a second frequency pre-compensation value corresponding to the current Doppler shift.

According to an example embodiment of the first aspect, the apparatus may comprise: means for determining a next frequency pre-compensation value of the plurality of frequency pre-compensation values based on a weighted average of a previous frequency pre-compensation value and a predetermined change of the frequency pre-compensation value.

According to an example embodiment of the first aspect, the apparatus may comprise: means for estimating a direction and/or an amount of change of the current Doppler shift; means for determining a next frequency pre-compensation value of the plurality of frequency pre-compensation values based the direction and/or the amount of change of the current Doppler shift.

According to an example embodiment of the first aspect, the apparatus may comprise: means for estimating the direction and/or the amount of change of the current Doppler shift based on signals received from the non-terrestrial network.

According to an example embodiment of the first aspect, the apparatus may comprise: means for estimating the direction and/or the amount of change of the current Doppler shift based on ephemeris data of at least one satellite of the non-terrestrial network.

According to a second aspect, a method is disclosed. The method may comprise: estimating a location of an apparatus; determining a quality of the estimated location; determining, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network; and transmitting a plurality of random access preambles corresponding to the plurality of frequency pre-compensation values.

According to an example embodiment of the second aspect, the method may comprise: determining, based on the location of the apparatus, a single frequency pre-compensation value and transmitting a single random access preamble corresponding to the single frequency pre-compensation value, in response to determining that the quality of the estimated location does not meet the condition for applying multiple frequency pre-compensation values for accessing the non-terrestrial network.

According to an example embodiment of the second aspect, the method may comprise: estimating the location of the apparatus based on at least one satellite positioning signal and/or at least one terrestrial positioning signal.

According to an example embodiment of the second aspect, the at least one satellite positioning signal may be received from a serving satellite of the non-terrestrial network and/or at least one other satellite.

According to an example embodiment of the second aspect, the method may comprise: determining the quality of the estimated location based on downlink information received from the serving satellite and/or measurements of at least one downlink signal received from the serving satellite.

According to an example embodiment of the second aspect, the method may comprise: determining the quality of the estimated location based on at least one of: variance of time information, frequency information, or location information determined based on the at least one satellite positioning signal; a number of satellites used for determining the time information, frequency information, or the location information; variance of the downlink information; or downlink radio channel conditions associated with the at least one downlink signal.

According to an example embodiment of the second aspect, the method may comprise: transmitting a subsequent random access preamble of the plurality of random access preambles, in response to not receiving a random access response within a predetermined time period from transmission of a previous random access preamble.

According to an example embodiment of the second aspect, the method may comprise: transmitting the plurality of random access preambles before an expected reception time of a random access response.

According to an example embodiment of the second aspect, at least two of the plurality of random access preambles may overlap in time and/or the plurality of random access preambles may comprise same preamble sequence.

According to an example embodiment of the second aspect, the condition for applying the plurality of frequency pre-compensation values for accessing the non-terrestrial network may comprise the quality of the estimated location being above or equal to a first threshold, and the method may comprise: determining a reference frequency offset based on a signal received from the non-terrestrial network when the quality of the estimated location is above or equal to a second threshold; determining a current frequency offset based on a signal received from the non-terrestrial network when the quality of the estimated location is below or equal to the first threshold; determining a current Doppler shift based on a subtraction of the reference frequency offset and the current frequency offset; and determining the plurality of frequency pre-compensation values based on the current Doppler shift.

According to an example embodiment of the second aspect, the first threshold may be equal to the second threshold or the first threshold may be lower than the second threshold.

According to an example embodiment of the second aspect, the method may comprise: determining a first frequency pre-compensation value based on the location of the apparatus; and selecting the plurality of frequency pre-compensation values from an interval between the first frequency pre-compensation value and a second frequency pre-compensation value corresponding to the current Doppler shift.

According to an example embodiment of the second aspect, the method may comprise: determining a next frequency pre-compensation value of the plurality of frequency pre-compensation values based on a weighted average of a previous frequency pre-compensation value and a predetermined change of the frequency pre-compensation value.

According to an example embodiment of the second aspect, the method may comprise: estimating a direction and/or an amount of change of the current Doppler shift; determining a next frequency pre-compensation value of the plurality of frequency pre-compensation values based the direction and/or the amount of change of the current Doppler shift.

According to an example embodiment of the second aspect, the method may comprise: estimating the direction and/or the amount of change of the current Doppler shift based on signals received from the non-terrestrial network.

According to an example embodiment of the second aspect, the method may comprise: estimating the direction and/or the amount of change of the current Doppler shift based on ephemeris data of at least one satellite of the non-terrestrial network.

According to an example embodiment of the second aspect, the method may be performed by the apparatus.

According to a third aspect, a computer program or a computer program product may comprise instructions for causing an apparatus to perform at least the following: estimating a location of the apparatus; determining a quality of the estimated location; determining, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network; and transmitting a plurality of random access preambles corresponding to the plurality of frequency pre-compensation values. The computer program or the computer program product may comprise instructions for causing an apparatus to perform any example embodiment of the method of the second aspect.

According to a fourth aspect, an apparatus may comprise at least one processor; and at least one memory storing instructions that, when executed by the at least one processor, cause the apparatus at least to: estimate a location of the apparatus; determine a quality of the estimated location; determine, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network; and transmit a plurality of random access preambles corresponding to the plurality of frequency pre-compensation values. The at least one memory may store instructions that, when executed by the at least one processor, cause the apparatus to perform any example embodiment of the method of the second aspect.

Any example embodiment may be combined with one or more other example embodiments. Many of the attendant features will be more readily appreciated as they become better understood by reference to the following detailed description considered in connection with the accompanying drawings.

### DESCRIPTION OF THE DRAWINGS

The accompanying drawings, which are included to provide a further understanding of the example embodiments and constitute a part of this specification, illustrate example embodiments and together with the description help to understand the example embodiments. In the drawings:
FIG. 1 illustrates an example of a non-terrestrial communication network;
FIG. 2 illustrates an example of perceived and actual locations of a UE;
FIG. 3 illustrates an example of a four-step random access procedure;
FIG. 4 illustrates an example of a two-step random access procedure;
FIG. 5 illustrates an example of repetitive transmission of random access preambles if no random access response is received;
FIG. 6 illustrates an example of direct transmission of multiple random access preambles;
FIG. 7 illustrates an example of mapping random access preambles to random access occasions;
FIG. 8 illustrates an example of an apparatus configured to practice one or more example embodiments; and
FIG. 9 illustrates an example of a method for random access.

Like references are used to designate like parts in the accompanying drawings.

### DETAILED DESCRIPTION

Reference will now be made in detail to example embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

Devices, such as for example user equipment (UE), may be enabled to access services through a terrestrial network. In addition, devices may be enabled to access services over a non-terrestrial network (NTN) provided by satellites or other non-terrestrial platforms, such as high altitude platform systems (HAPS) or unmanned aircraft systems (UAS). Terrestrial cellular networks, e.g. 5G NR as defined by the 3^{rd} Generation Partnership Project (3GPP), may be configured to support non-terrestrial network access. UEs supporting NTN may have positioning capability, for example by means of GNSS.

In one example of an NTN system, 5G access nodes (gNB) may be deployed onboard satellites, or signals between a UE and a gNB may be relayed via a satellite, for example to provide communication coverage over a very large area that may be otherwise unreachable by cellular networks. Non-terrestrial networks may be for example used to connect internet-of-things (IoT) devices globally as well as to provide personal communication in remote areas and in disaster relief.

In order to access a non-terrestrial network, a UE may perform pre-compensation of the propagation delay and Doppler shift between the UE and the access node. For this, the UE may use GNSS assistance information, for example location and/or timing information, determined based on GNSS signals. However, the information provided by GNSS may not be always accurate. Example embodiments of the present disclosure improve access to a non-terrestrial network in presence of inaccurate GNSS information.

According to an example embodiment, an apparatus may estimate its location based on at least one satellite positioning signal. The apparatus may determine a quality of the estimated location, for example in order to determine whether to transmit multiple random access preambles or not. The apparatus may determine, based on its location, multiple frequency pre-compensation values for accessing a non-terrestrial network, if it determines that the quality of its location estimate is poor. The apparatus may then transmit multiple random access preambles corresponding to different frequency pre-compensation values. This enables to increase probability of successful reception of one of the RA preambles, thereby improving random access to the non-terrestrial network. Further example embodiments are described with reference to the drawings.

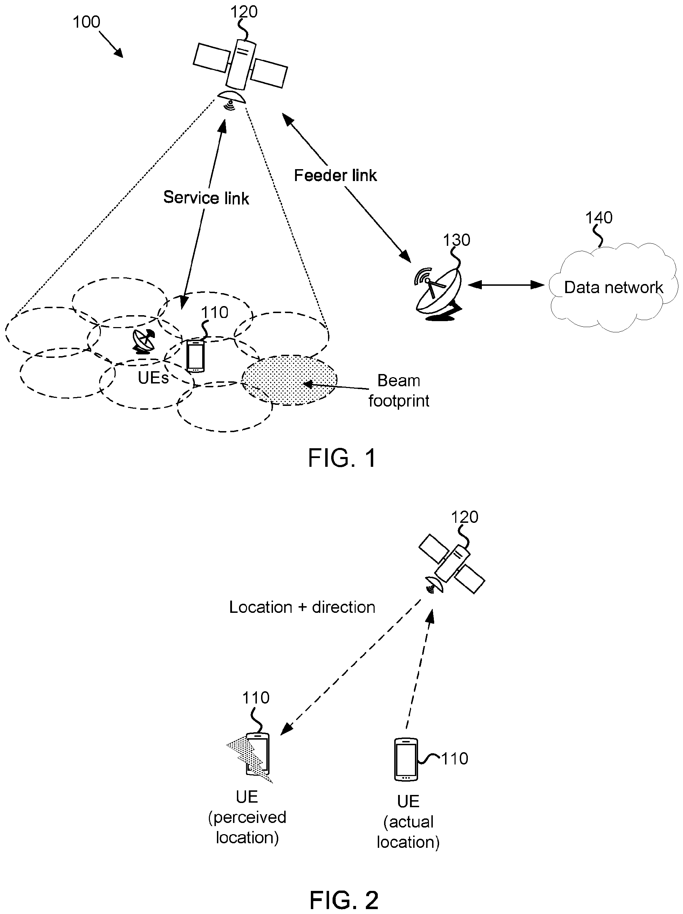

FIG. 1 illustrates an example of a non-terrestrial communication network. Non-terrestrial network 100 may comprise one or more UEs 110. A service link may be provided between UE 110 and a satellite 120, which is provided as an example of a non-terrestrial platform. Satellite 120 may be further connected to a gateway 130 by a feeder link. Gateway 130 may be connected to a data network 140 to enable UE 110 to access data services.

Satellite 120 may be located on a satellite orbit such as for example a low earth orbit (LEO), which may be located for example at an altitude of 500-1500 km. Satellite 120 may therefore be a LEO satellite. Other types of satellites may be however applied as well, including for example geostationary satellites with a higher orbit. With LEO satellites the communication delay may be however shorter and cost of a LEO satellite and its deployment may be lower compared to other type of satellites. A beam footprint size of a LEO satellite may be for example between 100-1000 km in radius. One LEO satellite may therefore cover a very large area on the earth, including possibly multiple countries.

Technologies such as Narrowband Internet-of-Things (NB-IoT), Long Term Evolution-Machine type communication (LTE-M), and enhanced Machine Type Communication (eMTC) as specified by 3GPP enable low power communication over cellular communication networks. When implementing NTN communications, UE 110 may be equipped with GNSS, or some other positioning system. GNSS may be used for example to compensate for random access channel (RACH) timing, for example initial RACH timing, and/or frequency misalignment (Doppler shift) due to the fast movement of the satellite (e.g. 7.5 km/s). This may result in situations where a UE 110 may be able to access the network only if it knows its own location sufficiently accurately. Even though 3GPP 5G NR is used as an example of a communication network, it is appreciated that the example embodiments described herein may be applied to any suitable communication and positioning system. Also, any suitable GNSS system such as for example Galileo or GPS (Global Positioning System), may be used.

Non-terrestrial network 100 may use a "transparent" architecture, where an access node (e.g. gNB) is located on the ground and satellite 120 performs frequency conversion and signal amplification. Gateway 130 may be co-located with the access node or not. For example, gateway 130 may be provided at a location with a good link to satellite 120, whereas the access node (incl. the baseband unit) may be provided at a location that enables easy maintenance and operation of the access node.

In the example of FIG. 1, signal propagation time between the access node and UE 110 covers both the feeder link and the service link. Downlink signals received by UE 110 may undergo a one-way propagation delay. If uplink frame timing is to be aligned with downlink frame timing at the access node, UE 110 may apply a timing advance (TA) that is equal to the round-trip delay when transmitting uplink data. This TA adjustment should be accurate enough such that the arrival time of an orthogonal frequency division multiplexing (OFDM) symbol is within the cyclic prefix window of the access node, in order to prevent signals from multiple UEs from interfering each other.

Due to the high satellite speed of ~7,5km/s for LEO deployments, signal transmission on both service and feeder link will be subject to a large Doppler effect, for example in form of a Doppler shift due to strong line of sight (LOS) character of both links. Feeder link Doppler, in both downlink and uplink directions, may be handled by the satellite subsystem (e.g. satellite 120 and gateway 130) in a way that is transparent to the access node and UE 110.

However, UE 110 may still need to deal with the Doppler shift on the service link. This Doppler shift may span multiple subcarrier spacings (SCS) of OFDM, also depending on the elevation angle. In downlink, this may force UE 110 to detect and compensate a large frequency offset caused by the Doppler shift, so that it can compensate the frequency offset and detect the signal on the frequency grid without significant inter-carrier interference (ICI). In uplink, UEs may need to pre-compensate the Doppler shift on the service link so that signals from different UEs reach the other end of the link without large (relative) frequency offsets, thereby reducing the intercarrier interference.

For example, UEs may adjust their uplink carrier frequency to pre-compensate for the service link Doppler. To enable this, UEs may use ephemeris information of satellite, comprising for example location and speed vector of the serving satellite and optionally other satellite(s). This information may be broadcasted, e.g. regularly, by the access node, for example as part of system information (e.g. system information block(s), SIB). The access node may also broadcast its own location.

UEs may be provided with GNSS support. Therefore, UE 110 may have access to GNSS location and/or GNSS time. This way UE 110 may derive its own location and use the derived location for uplink time/frequency alignment, for example in radio resource connection (RRC) idle state (RRC_IDLE), inactive state (RRCINACTIVE), or connected state (RRC_CONNECTED).

In general, usage of GNSS device at UE 110 may be implementation specific since the GNSS is a non-cellular radio generally independent of 3GPP. However, in the NTN scenarios (e.g. IoT and NR cases) UE 110 may use its GNSS device to assist the communication by the 3GPP radio, for example by time/frequency pre-compensation before attempting initial RACH access.

FIG. 2 illustrates an example of perceived and actual locations of a UE One problem in systems relying on GNSS assistance is that the GNSS information may not be accurate. There may be several sources for inaccuracies. Potential sources for inaccurate GNSS information include UE 110 being located at dense urban environments, locations with limited GNSS coverage (e.g. semi-indoor), or locations in deep forests or otherwise limited vision to the sky, or the GNSS system being subject to disturbances such as for example outage, spoofing, interference, or the like.

If the perceived location of UE 110 is not aligned with the actual position, or UE 110 is not able to derive GNSS-provided timing with sufficient accuracy, UE 110 may not be able to perform pre-compensation for random access with sufficient accuracy. For example, an internal pre-compensation algorithm of UE 110, using its understanding of the propagation delay to the access node for compensating the transmit timing or frequency for random access preamble, and optionally later signals, may provide a wrong time offset (timing advance) and/or frequency offset and therefore the signals received at the access node may be offset to a level that may not be acceptable for maintaining network performance.

One challenge with NTN, in contrast to terrestrial networks, is the limited link budget due to the long distances between transmitter and receiver, on both service and feeder link. LEO satellites may be located for example at height of 600 km or 1200 km. The coverage at the uplink may be therefore limited by the transmit power of UE 110. In case of link blockage, for example by a building at indoor or semi-indoor scenarios, the path loss may be high and the achievable uplink throughput thus low. For example, assuming a carrier frequency of 2GHz, LEO satellite orbiting at 600 km, and handheld UE, the signal-to-noise ratio (SNR) may be for example around 5dB in downlink and 0 dB in uplink. Actual SNR values may further depend on several other parameters, for example location of UE 110 in a cell, antenna gain etc. The above SNR values are therefore provided as rough estimates.

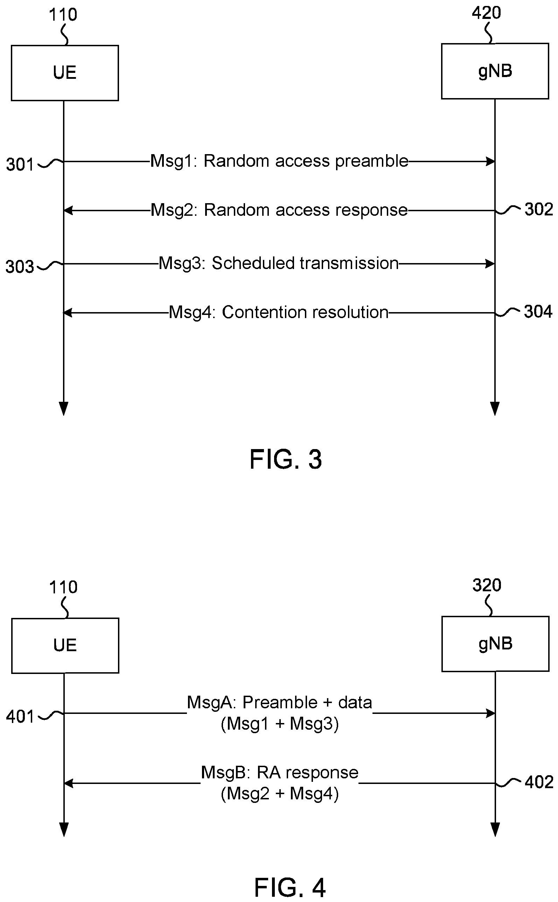

FIG. 3 illustrates an example of a four-step random access procedure. An access node, represented herein by gNB 320 may be included in satellite 120, HAPS, or UAM, or be a terrestrial access node. The four-step random access procedure is provided as an example of a random access process.

At operation 301, UE 110 may transmit a random access (RA) preamble. The RA preamble may comprise a first message (Msg1). Msgl may be also called a random access request. The RA preamble may be transmitted on a physical random access channel (PRACH). The RA preamble may comprise at least one preamble sequence The RA preamble may further comprise a cyclic prefix. The cyclic prefix may be located before the preamble sequence(s) in transmission order. The gNB 320 may receive the RA preamble. After transmission of the RA preamble the UE 110 may initiate monitoring for an RA response, for example on a physical downlink control channel (PDCCH). UE 110 may monitor for the RA response during a RA response window, which may comprise an expected reception time window for the RA response. When transmitting the RA preamble, UE 110 may apply time and frequency pre-compensation, as described above.

At operation 302, gNB 320 may transmit a random access (RA) response. The RA response may comprise a second message (Msg2). The RA response may comprise an identifier of the RA preamble received by gNB 320 at operation 301. In response to receiving an RA response comprising the identifier of the RA preamble transmitted at operation 301, UE 110 may determine the RA response to be successful and proceed to transmitting a scheduled uplink transmission. In response to not receiving an RA response, for example within a configured RA response window, or failing to verify the RA response, the UE 110 may determine that the RA response has failed. In this case, UE 110 may determine to try random access again or determine the RA procedure to have failed. When retransmitting the RA preamble, UE 110 may apply a different frequency pre-compensation value, as will be further described below.

The RA response may indicate to UE 110, which uplink resources it can use to perform its uplink transmission of following message(s) to gNB 320. The RA response may further comprise an indication of a network configured timing advance to be applied for adjusting the transmit timing of UE 110, for example as a timing advance command (TAC). The network configured timing advance may be different from the (initial) timing advance used pre-compensation for transmitting the RA preamble. UE 110 may apply the network configured timing advance on top of the initial timing advance. For example, a timing advance applied for subsequent messages may comprise a sum of the initial timing advance and the network configured timing advance. This enables UE 110 to further adjust the timing for transmission of subsequent messages.

At operation 303, UE 110 may transmit a scheduled transmission. The scheduled (uplink) transmission may comprise a third message (Msg3). UE 110 may adjust the transmission time of the scheduled transmission based on the indication of the network configured timing advance received at operation 302. This enables to ensure that the scheduled transmission is aligned with other uplink signals from other UEs and thereby to maintain orthogonality between the signals received at gNB 320, even with a relatively short cyclic prefix of the scheduled transmission. The scheduled transmission (Msg3) may comprise control information, for example a medium access control (MAC) control element (CE) ) such as a C-RNTI (cell radio network temporary identifier) MAC CE. Alternatively, or additionally, the scheduled transmission may comprise common control channel (CCCH) information, for example one or more CCCH service data units (SDU). The data carried by the scheduled transmission may hence comprise data submitted from an upper protocol layer. The data may be associated with the UE contention resolution identity, as part of the random access procedure. The scheduled transmission may in general comprise any information scheduled for transmission in the random access procedure after the RA preamble. UE 110 may initiate a contention resolution timer in response to transmission of the scheduled transmission. The scheduled transmission (Msg3) may be transmitted in response to receiving the RA response (Msg2).

At operation 304, gNB 320 may transmit a contention resolution message. The contention resolution may comprise a fourth message (Msg4). The contention resolution massage may be transmitted on the PDCCH or the physical downlink shared channel (PDSCH). UE 110 may determine the contention resolution to be successful, in response to receiving a contention resolution message addressed to UE 110, for example by means of the contention resolution identity of UE 110 (e.g. a particular value of the C-RNTI).

FIG. 4 illustrates an example of a two-step random access procedure. The two-step random access procedure is provided as another example of random access process.

At operation 401, UE 110 may transmit both a random access preamble and data (PUSCH). These messages may be transmitted together (e.g. one after another) and the combination of these messages may be referred to as MsgA. Therefore, MsgA may comprise a first element, Msgl (= MsgA preamble), and a second element, Msg3 (= MsgA PUSCH). The MsgA preamble may comprise an RA preamble similar to operation 301. The MsgA PUSCH may comprise information content similar to the scheduled transmission of operation 303. The gNB 320 may receive the RA preamble and the data (PUSCH). Operation 401 may therefore comprise consecutive transmission of the RA preamble and the scheduled transmission. For example, the scheduled transmission may be transmitted before reception of the RA response (response to the RA preamble) from gNB 320. Accordingly, UE 110 may transmit the scheduled transmission without receiving a response to the RA preamble before the scheduled transmission. It is however noted that there may be a time gap between transmission of the RA preamble and the scheduled transmission. The RA preamble and the scheduled transmission may be also transmitted on different channels (e.g. PRACH and PUSCH).

At operation 402, gNB 320 may transmit an RA response and a contention resolution message. These messages may be transmitted together (e.g. one after another) and the combination of these messages may be referred to as MsgB. Therefore, MsgB may comprise a first element, Msg2 similar to the RA response of operation 302, and a second element, Msg4 similar to the contention resolution of operation 304. Operation 402 may therefore comprise consecutive transmission of the RA response and the contention resolution messages. UE 110 may receive the RA response and the contention resolution message.

In NTN systems, UE 110 may use a non-zero timing advance value, which may be defined or configured by gNB 320. Alternatively, UE 110 may autonomously determine the time offset (timing advance) value to be applied for random access. UE 110 may further determine a value (frequency shift/offset) for frequency pre-compensation. With uncertainty of the location of UE 110 and/or the location of satellite 120, as well as UE's own understanding of time as obtained based on GNSS and gNB time information, there is a risk that the UE 110 selects a wrong timing advance value for the random access procedure or that UE 110 is not able to correctly pre-compensate the uplink Doppler shift of the service link.

In some scenarios, e.g. indoors, UE 110 may have both poor uplink link budget due to signal blockage as well as poor GNSS availability, making the overall uplink transmission very challenging. For example, the RA procedure may be susceptible to errors, because UE 110 may not have received any assistance from the network (e.g. TA) yet and it may rely on autonomous uplink synchronization using GNSS only. For example, transmission of the random access preamble (e.g. Msgl or MsgA), as well as subsequent signals, may be received with a large time and/or frequency offset, possible causing their detection to fail at gNB 320. Hence, it may not be possible to maintain acceptable network performance. In this case UE 110 may not get any response to the RA preamble from gNB 320 within the expected time window.

As noted above, UE 110 may use an uplink frequency pre-compensation value (offset) based on autonomous determination using its GNSS. With uncertainty about UE location, there is a risk that UE 110 selects a misaligned value of frequency pre-compensation for the RA procedure. As a consequence, the random access preamble may be received by gNB 320 with a very low SNR. Example embodiments of the present disclosure therefore provide a UE-based solution to overcome these challenges and to enhance performance of the random access procedure.

For example, a method is disclosed where UE 110, based on its own estimated coverage and GNSS quality situation, performs multiple hypotheses for uplink frequency pre-compensation and applies multiple uplink pre-compensation values for the transmission of the RA preamble. As a first example, if UE 110 has not received an RA response from gNB 320 to an initial preamble transmission (cf. operations 301 or 401), UE 110 may apply adjusted frequency pre-compensation value in subsequent attempts, resulting in a serial approach using one RA process at a time. The frequency pre-compensation values may be calculated for example based on the shape of estimated Doppler spectrum in downlink and/or GNSS input, optionally with other parameters.

As a second example, UE 110 may transmit the RA preamble multiple times by applying different frequency pre-compensation values for each transmission, without waiting for the RA response from gNB 320. This may result in transmission of multiple RA preambles sequentially or in parallel. In this way, UE 110 is able to increase the probability of at least one of the RA preambles to be successfully received and detected by gNB 320, leading to successful connection setup. Overall, this may enable more reliable and faster (re-)establishment of connection to non-terrestrial network 100.

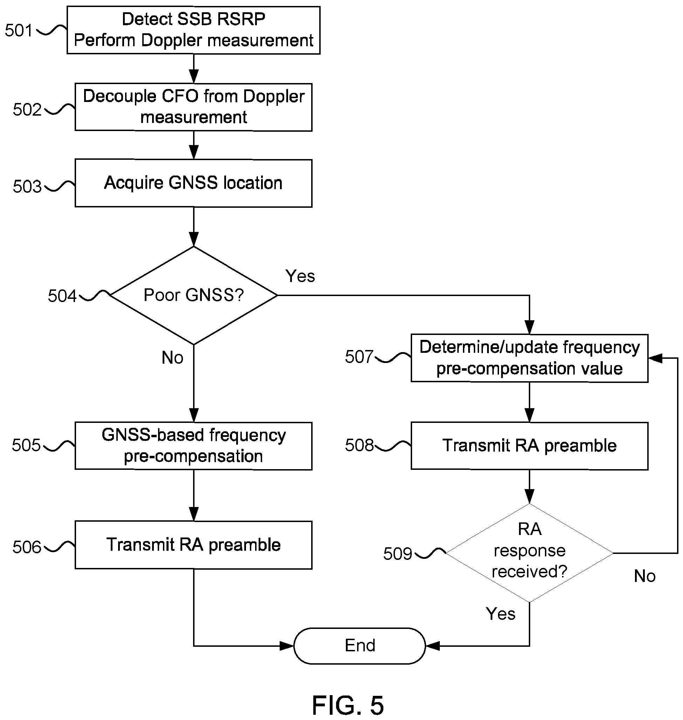

FIG. 5 illustrates an example of repetitive transmission of random access preambles if no random access response is received.

At operation 501, UE 110 may receive a signal from non-terrestrial network 100. UE 110 may measure received power of the signal, for example based on reference signal received power (RSRP) of synchronization signal block(s) (SSB) of the signal. UE 110 may further perform Doppler measurement for the received signal, for example to detect Doppler shift.

At operation 502, UE 110 may decouple carrier frequency offset (CFO) from the Doppler measurement. To enable accurate estimation of downlink Doppler shift, an SSB preprocessing step may be performed. This may be done to perform the decoupling of the SSB-based Doppler estimation from carrier frequency estimation. The SSB design may enable UE 110 to only estimate a total frequency offset (TFO), which may be expressed as a sum between the Doppler shift (*ƒ_{D}*) due to relative movement between UE 110 and satellite 120 and the internal carrier frequency offset (CFO) of UE 110, originating for example from imperfections of local oscillators ofUE 110 and satellite 120.

At a first time instant *t*₀, when UE 110 is in good GNSS coverage, e.g. quality of estimated UE location does not meet a condition for applying multiple frequency pre-compensation values or hypotheses for random access (e.g. the quality being above (or equal to) a first threshold), UE 110 may use the GNSS-acquired UE location to compute the Doppler shift (*ƒ_{D}*). This may be done based on ephemeris data of satellite 120, for example its location, speed, and direction with respect to UE 110.

UE 110 may also use NTN signals (e.g. SSBs) to compute the total frequency offset *TFO = ƒ*_{D} + *CFO.* Using these two estimates, UE 110 may compute the CFO at time *t*₀, *CFO*(*t*₀), as the difference between the two estimates. By doing this, UE 110 may obtain information about the CFO and compensate for it.

At the current time instant *t*₁, when UE 110 is in bad GNSS coverage (e.g. quality of estimated UE location is below (or equal to) the first threshold or a second threshold), UE 110 may assess whether *CFO*(*t*₀) is still valid. CFO may change very slowly so UE 110 may determine CFO to the valid if the time period between *t*₀ and *t*₁ is short enough. If *CFO*(*t*₀) is determined to be valid, UE 110 may use SSB(s) to compute a current TFO and extract current Doppler shift based on subtracting the previously determined CFO from the current TFO, for example by *ƒ_{D}*(*t*₁) = *TFO*(*t*₁) - *CFO*(*t*₀). The first threshold may be equal to the second threshold. It is however possible that the second threshold is lower than the first threshold. This enables to provide further separation between different quality levels of GNSS conditions, serving as criteria for the frequency offset measurements at time instants *t*₀ and *t*₁.

UE 110 may therefore determine *CFO*(*t*₀) as a reference frequency offset. UE 110 may further determine the current (total) frequency offset *TFO*(*t*₁) and determine the current Doppler shift by subtraction of these two. This enables to mitigate the effect of CFO when performing frequency pre-compensation for RA preambles.

At operation 503, UE 110 may acquire GNSS location. This may be done based on one or more GNSS signals (satellite positioning signals) or signals from other satellite system than GNSS. In general, UE 110 may determine its location by any suitable means, for example based on terrestrial positioning signals, received for example from terrestrial access node(s). Terrestrial positioning signals may be also used in combination with satellite positioning signal(s). In case of satellite positioning UE 110 may receive signals from multiple satellites and estimate time-of-arrival (TOA) for each signal. The received signals may comprise an indication of the transmission time of the respective signal from the respective satellite, or the transmission times may be otherwise known to UE 110. Based on the difference between the transmission times and respective TOAs, UE 110 may calculate a distance between UE 110 and each satellite. Each distance from the known position of the respective satellite gives a circle of possible locations. Having calculated distances from a number of satellites, UE 110 may determine its location at an intersection of the circles. The determined position may be optionally selected from multiple possible locations based on other information such as for example UE 110 being located within a particular cell of a terrestrial cellular network. Therefore, multiple GNSS signals may not be always needed.

At operation 504, UE 110 may determine quality of the estimated GNSS location. In other words, UE 110 may evaluate whether it is in poor GNSS coverage and/or poor GNSS conditions. Poor GNSS coverage/conditions may occur for example when UE 110 is located in an indoor or semi-indoor environment. The quality of GNSS signal(s) may indicate quality (e.g. accuracy) of the location estimated by UE 110 based on the GNSS signal(s).

The quality of GNSS signal(s) may be determined based on various characteristics of received signal(s), for example satellite positioning signal(s) or downlink signal(s) received from (serving) satellite 120, or satellite positioning signal(s) of other GNSS satellite(s) . UE 110 may for example use the received power levels of NTN signals as obtained, e.g., by reference signal received power (RSRP) measurements in downlink, to determine the channel path loss. The determined path loss may be then compared to a threshold. The threshold may be pre-defined. The threshold may depend on at least one of the transmit power, the distance to the satellite, or the expected received power in LOS. If the measured path loss is lower than this threshold, UE 110 may determine that it is in poor coverage also with respect to GNSS signals. Determining the quality of the estimated location may be therefore based on measurements of NTN downlink signal(s) received from satellite 120.

The quality of GNSS signal(s), and/or quality of the associated time, frequency, or location information derived by UE 110 based on the GNSS signal(s), may be determined by various means. UE 110 may for example consider as figure(s) of merit the variance of the GNSS signal (e.g. in terms of detected TOA) and/or variance of the provided downlink information (e.g. over a certain time window), the number of GNSS satellites detected by UE 100 and/or being currently in use by UE 110, for example the number of satellites or satellite signal(s) used for deriving the time, frequency, or location information. UE 110 may evaluate the variance of the GNSS signal based on stability, e.g. amount of change, over an observation time interval, of the time and/or frequency reference which the localization system provides. Variance of the downlink information may be determined based on changes (e.g. number of changes) during the observation time interval. For example, UE 110 may determine quality of the estimated location to be low if there are significant changes (e.g. amount of change(s) is over a threshold) in the time and/or frequency reference provided by the GNSS signal(s) and/or if there are many changes in the downlink information (e.g. number of changes is above a threshold). UE 110 may determine quality of the estimated location to be high if there are no significant changes (e.g. amount of change is below a threshold) in the time and/or frequency reference provided by the GNSS signal(s) and/or if there are no changes in the downlink information (e.g. number of changes is below a threshold). UE 110 may therefore use downlink information received satellite 120 to determine the quality of the estimated location. An indication of the parameter(s) to be considered by UE 110 for GNSS evaluation may be received from gNB 320 or be preconfigured at UE 110.

Determining the quality of the estimated location may be further based on channel measurements on the NTN downlink. For example, by measuring the delay spread of the channel, indicating whether there are strong non-LOS reflections, UE 110 may determine whether it is in poor GNSS conditions. For example, if the Rician k factor (i.e. ratio between power of LOS component over the sum of powers of non-LOS components) is below a certain level, UE 110 may determine that there are strong non-LOS components and that it is likely located indoors.

Determining the quality of the estimated location may be further based on Doppler shift detected on the NTN downlink, for example measured from primary and/or secondary synchronization signals (PSS/SSS) or other downlink reference signals. UE 110 may for example compare the measured Doppler shift on the service link with the Doppler shift value computed based on GNSS reference (estimated location). If these values differ significantly, for example is the difference is above a certain threshold (e.g. in Hz), UE 110 may determine that the GNSS-based location may not be accurate. For determining Doppler shift reference based on GNSS, a location-based approach may be used, relying on GNSS location of UE 110 and satellite location, which may be known form the ephemeris data. It is noted that in response to the network pre-compensating part of the service link Doppler shift in the downlink, e.g. with respect to a reference point in the cell, an indication of such partial frequency pre-compensation value(s) may be provided to UE 110 by gNB 320. UE 110 may consider this when determining its own frequency pre-compensation values.

Determining the quality of the estimated location may be further based on Doppler spread. Large Doppler spread may be due to rich scattering environment at the UE location. Large Doppler spread may therefore indicate a high probability of UE 110 being located indoors. Hence, if Doppler spread is above a threshold, UE 110 may determine that it is in poor GNSS conditions. The quality of the estimated location may be therefore generally determined based on radio channel conditions when receiving the downlink signal(s). Examples of the radio channel conditions include delay spread, LOS characteristics such as for example relative strength of LOS component(s) (e.g. ratio between LOS and non-LOS components), Doppler shift, or Doppler spread.

Quality of estimated GNSS location may be further determined based on other satellite positioning parameters, such as for example the dilution of precision (DOP). DOP of is a measure that describes how much errors in the measurement affect the result of the estimation. DOP may be determined based on the positions of the satellites used for determining the GNSS location at UE 110. The effect of geometry of the satellites on position error may be referred to as the geometric dilution of precision (GDOP). Time dilution of the precision (TDOP) may indicate the uncertainty of the clock. Values of the different types of DOP may be give as an integer number, where a larger value indicates weaker precision.

The quality GNSS-based UE location information may be determined based on any of the above parameters, or a combination thereof. For example, an overall quality of the estimated UE location may be determined based on an average (e.g. weighted average) of the values of different parameters. A common condition (e.g. threshold) may be then set in order to determine whether GNSS quality is poor or not. Based on this UE 110 may determine whether to transmit multiple RA preambles with different frequency pre-compensation values, as will be further described below.

If UE 110 determines that GNSS quality is not poor (e.g. quality not meeting the condition for applying multiple frequency pre-compensation values or hypotheses), UE 110 may move to execution of operation 505. If UE 110 determines that GNSS quality is poor (e.g. quality meeting the condition for applying multiple frequency pre-compensation values or hypotheses), UE 110 may move to execution of operation 507.

At operation 505, UE 110 may perform GNSS-based frequency pre-compensation. Based on the UE location and speed vector, as provided by GNSS or other positioning means, as well as the satellite location and speed vector at given point in time, as provided by the gNB or satellite 120, UE 110 is able to calculate the Doppler shift on the service link between UE 110 and satellite 120. This value may be then applied in the uplink to pre-compensate the Doppler shift. In case part of the Doppler shift has pre-compensated in the downlink, this value may be indicated by the network to UE 110. UE 110 may determine one frequency pre-compensation value, which may comprise a frequency offset or shift from a centre frequency of the uplink channel (e.g. PRACH). Since the GNSS location is determined to be good enough, UE 110 may determine a single frequency pre-compensation value and be confident that it is sufficiently accurate for successful random access with a single RA preamble.

At operation 506, UE 110 may transmit a random access preamble (e.g. Msgl or MsgA) with the single frequency pre-compensation value determined at operation 505. In order to perform frequency pre-compensation, UE 110 may shift the random access preamble in frequency by applying a frequency shift value to the frequency of the uplink transmitted signal in accordance with the frequency pre-compensation value.

At operation 507, UE 110 may determine a frequency pre-compensation value, similar to operation 505. However, this operation may be performed iteratively with operations 508 and 509, when following the 'No' branch from operation 509. When returning from operation 509, UE 110 may update the frequency pre-compensation value for a subsequent RA preamble.

At operation 508, UE 110 may transmit an RA preamble, similar to operation 506, but applying the frequency pre-compensation value determined at operation 507.

At operation 509, UE 110 may determine whether an RA response has been received, for example within a predetermined time period (e.g. RA response period). This period may be calculated for example from transmission of a previous (e.g. latest) RA preamble. The time period may comprise an expected reception time for the RA response. The expected reception time may for example be the latest point of an expected reception time window. If no RA response has been received, UE 110 may move back to execution of operation 507 to determine an updated frequency pre-compensation value for a subsequent RA preamble. A subsequent RA preamble may be therefore transmitted at operation 508, based on an updated frequency pre-compensation value, in response to not receiving the RA response.

The procedure may be ended either by transmission of the single RA preamble at operation 506 or determining that a RA response was received at operation 509. However, a maximum number of RA preambles may be set and the procedure may be alternatively ended when reaching the maximum number of RA preambles.

Iteration of operations 507, 508, and 509, UE 110 may result in transmission of a plurality of RA preambles corresponding to a plurality of frequency pre-compensation values iteratively determined at operation 507. Each RA preamble may be transmitted based on a respective frequency pre-compensation value. For example, the respective RA preamble may be frequency shifted accordingly. Hence, at every attempt UE 110 may update the frequency pre-compensation value. Methods for determining how to select the different frequency pre-compensation values are further described below.

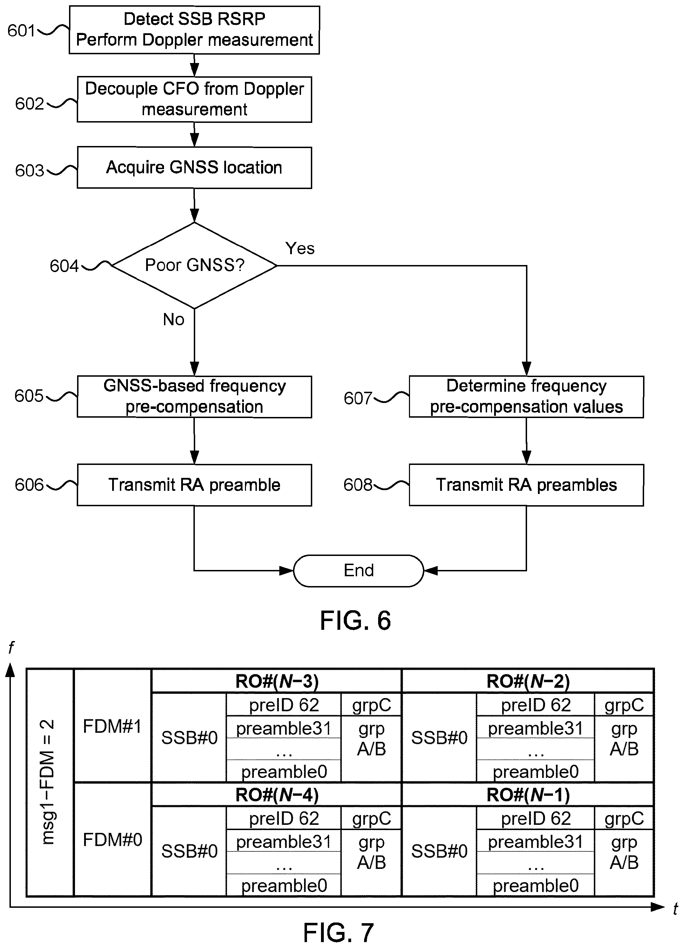

FIG. 6 illustrates an example of direct transmission of multiple random access preambles. Operations 601 to 606 may be similar to operations 501 to 506, respectively.

At operation 607, UE 110 may determine a plurality of frequency pre-compensation values. This may be performed similar to operation 507. However, frequency pre-compensation values may be determined for a plurality of preambles directly, instead of the iterative approach of FIG. 5, where the transmission of multiple RA preambles is subjected to the condition of not receiving the RA response (cf. operation 509).

At operation 608, UE 110 may transmit a plurality of RA preambles corresponding to the plurality of frequency pre-compensation values determined at operation 607. UE 110 apply each frequency pre-compensation value to a respective RA preamble, for example by frequency shifting the RA preamble. UE 110 may transmit the plurality of RA preambles (e.g. a burst of preambles) before the expected reception time of the RA response. The procedure may be ended either by transmission of the single RA preamble at operation 606 or by transmission of the plurality of RA preambles at operation 608.

In this way, UE 110 is able to increase the probability of at least one of the RA preambles to be successfully received and decoded by the access node, thereby leading to successful connection setup. The procedure of FIG. 6 may be potentially faster than the procedure of FIG. 5. This solution may be used for example when more than one time-domain RACH occasion (RO) per synchronization signal/physical broadcast channel (SS/PBCH) block is available in one RA occasion. It is however possible to apply this approach in case a single RO window is available and all RA preamble transmissions target this RO. The procedure of FIG. 5 may consume less power if a lower number of RA preambles needs to be transmitted

When transmitting multiple RA preamble, for example based on the procedure of FIG. 5 or FIG. 6, UE 110 may use a different preamble sequence (code) in one or more of the transmissions. Alternatively, UE 110 may use the same preamble sequence for the RA preambles. Using the same preambles sequence provides the benefit of enabling the access node to combine different received versions of the same preamble sequence in order to improve detection performance.

Frequency pre-compensation values for the different RA preambles may be selected by various means. UE 110 may for example determine a first (e.g. initial) frequency pre-compensation value (*ƒ_{UL,GNSS}*) based on its location. The location may be estimated based on received GNSS signal(s). UE 110 may then determine a second frequency pre-compensation value (*ƒ_{UL,meas}*) based on the current Doppler shift, which may be measured based on signal(s), for example SSB(s), received from non-terrestrial network 100 (e.g. satellite 120).

UE 110 may for example divide the interval between the GNSS-based *ƒ_{UL,GNSS}* and the downlink measurement-based *ƒ_{UL,meas}* value into *N* sub-intervals. The sub-intervals may comprise a step Δ, where the step Δ may be defined for example by Δ = (*ƒ_{UL,GNSS}*-*ƒ_{UL,meas}*)/*N*. For example, at every update at operation 507, UE 110 may determine the next frequency pre-compensation value for the subsequent RA preamble (index *i* + 1) based on *ƒ*_{*UL,i*+1} = *ƒ_{UL,i,}* + Δ. Initial value *ƒ*_{*UL,*0} may be equal to *ƒ_{UL,GNSS}.*

It is however possible to select the different frequency pre-compensation values from this interval in any suitable manner, e.g. starting from *ƒ_{UL,meas}*. The frequency pre-compensation value for the RS preamble may be selected in increasing or decreasing order of equal or non-equal steps, or selected from that interval in a non-monotonic order. The sub-intervals may be equal or non-equal. Similar approach may be applied regardless of whether the different frequency pre-compensation values are determined iteratively, as in the example of FIG. 5, or in one go (e.g. before reception of the RA response or before its expected reception time), as in the example of FIG. 6.

UE 110 may determine the next frequency pre-compensation value, for example for a subsequent RA preamble, also based on a weighted average of a previous frequency pre-compensation value and a predetermined change (Δ) of the frequency pre-compensation value, for example by *ƒ*_{*UL,i*+1} = *αƒ_{UL,i,}* + (1 - *α*)Δ. The weighting factor *α* may be calculated by UE 110. The weighting factor *α* may be updated at one or more of the iterations of operation 507 or updated for one or more of the RA preambles transmitted at operation 608. The weighting factor α may be used to adjust the weight put to the two additive components, i.e. the frequency pre-compensation value of the previous iteration and the step Δ, and may be determined based on the size of Δ and the number of updates/iterations the UE is executing. Initial value *ƒ*_{*UL,*0} may be again equal to *ƒ_{UL,GNSS}*. This enables UE 110 to assign a larger weight to one of the two terms, or have the flexibility to configure larger steps within the interval from *ƒ_{UL,GNSS}* to *ƒ_{UL,meas}*.

UE 110 may also determine the next frequency pre-compensation value based direction and/or the amount of change of the Doppler shift. UE 110 may estimate the direction and/or an amount of change of the Doppler shift, for example based on ephemeris data of the satellite from which the NTN signal is received or based on a trend in measurements of the Doppler shift. UE 110 may therefore obtain pre-knowledge of which frequency direction and amount of additional frequency pre-compensation to apply, when attempting the RA preamble transmissions. Such pre-knowledge may be obtained for example from observations of the change rate of the Doppler shift, which may be estimated from reference signals or broadcast signals (e.g. SSBs) received from satellite 120, including ephemeris data. UE 110 may take into account not only the serving satellite, but also other satellite(s), which UE 110 expects to become the serving satellite in the near future, for example based on the ephemeris data.

FIG. 7 illustrates an example of mapping random access preambles to random access occasions (RACH occasion, RO). An RO may comprise a time-frequency space available for reception of an RA preamble at the access node. A mapping may be defined between SSB and RO. This mapping may be defined by radio resource control (RRC) parameters *msg1-FDM* (msg1 frequency division multiplexing) and *ssb-perRACH-OccasionAndCB-PreamblesPerSSB.* The first parameter *msg1-FDM* may indicate the number of ROs allocated in frequency domain for a single location in time domain. The second parameter *ssb-perRACH-OccasionAndCB-PreamblesPerSSB* may indicate the number of SSBs that may be mapped to one RO and also the number of preamble sequence indices that may be mapped to a single SSB.

For example, four ROs (RO#*N*-1 to RO#*N*-4) may mapped to a single SSB (SSB#0). ROs #N-4 and #*N*-3 may be allocated such that they overlap in time (t) but are allocated to different frequencies (FDM#0, FDM#1). The same applies to ROs #N-2 and #*N*-1. Some of the transmitted RA preambles may therefore overlap in time but not in frequency.

Preamble sequences 0 to 31 may be allocated to each of the four ROs. These preambles may belong to either Group A or B (grp A/B). Group A may be configured as a default group of preamble sequences. Group B may be configured with a specific configuration by the network, for example in SIB2. Furthermore, preambles (e.g. preID62) from another group (Group C) may be allocated to each of the four ROs

Transmission of multiple RA preambles (e.g. Msgl or MsgA) may be therefore implemented with time and/or frequency multiplexing. According to the example of FIG. 7, UE 110 transmits four RA preambles with same or different for example N=2 times at the same time instant on different frequencies, and M=2 times on different time resources. In general, UE 110 may transmit multiple RA preambles, having same or different preamble sequence, *N* times at overlapping time instants but on different frequencies, and M times on different time resources. Different uplink frequency pre-compensation values may be applied for one or more (e.g. all) of the transmitted RA preambles.

It is further noted that power ramping may be used for the different RA preambles. Hence, transmit power may be increased for each RA preamble or for a group of RA preambles (e.g. a group of RA preambles transmitted overlapping in time domain). This may be beneficial for example in case of poor NTN coverage, where increasing the transmit power while trying a different uplink frequency pre-compensation value may further improve the probability of preamble detection by the access node.

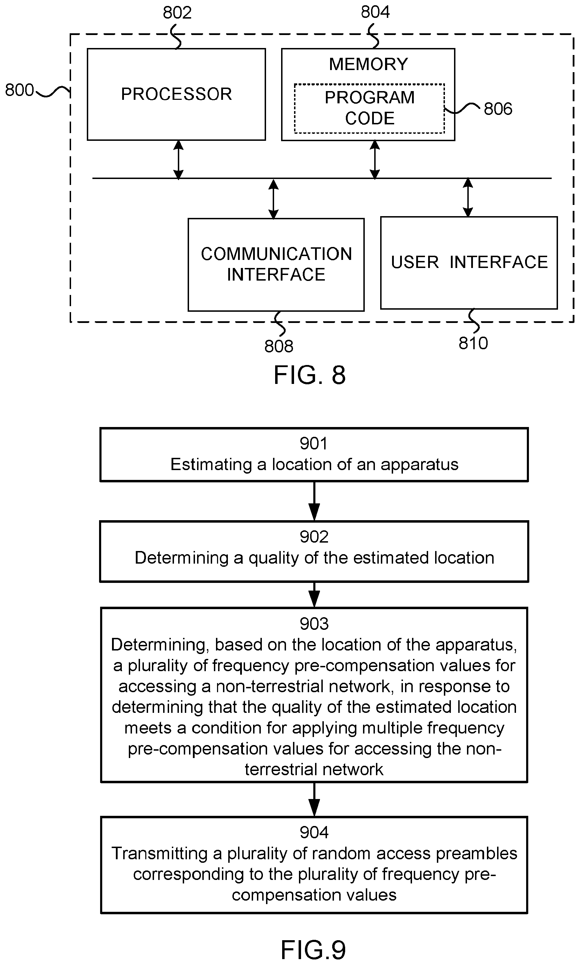

FIG. 8 illustrates an example embodiment of an apparatus 800, for example UE 110, satellite 120, or a component or a chipset of UE 110 or satellite 120, or an access node. Apparatus 800 may comprise at least one processor 802. The at least one processor 802 may comprise, for example, one or more of various processing devices or processor circuitry, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like.

Apparatus 800 may further comprise at least one memory 804. The at least one memory 804 may be configured to store instructions, for example as computer program code or the like, for example operating system software and/or application software. The at least one memory 804 may comprise one or more volatile memory devices, one or more non-volatile memory devices, and/or a combination thereof. For example, the at least one memory 804 may be embodied as magnetic storage devices (such as hard disk drives, floppy disks, magnetic tapes, etc.), optical magnetic storage devices, or semiconductor memories (such as mask ROM, PROM (programmable ROM), EPROM (erasable PROM), flash ROM, RAM (random access memory), etc.).

Apparatus 800 may further comprise a communication interface 808 configured to enable apparatus 800 to transmit and/or receive information to/from other devices. In one example, apparatus 800 may use communication interface 808 to transmit or receive signaling information and data in accordance with at least one cellular communication protocol and/or satellite positioning protocol The communication interface may be configured to provide at least one wireless radio connection, such as for example a 3GPP mobile broadband connection (e.g. 3G, 4G, 5G, or future generation protocols). However, the communication interface may be configured to provide one or more other type of connections, for example a wireless local area network (WLAN) connection such as for example standardized by IEEE 802.11 series or Wi-Fi alliance; a short range wireless network connection such as for example a Bluetooth, NFC (near-field communication), or RFID connection; a wired connection such as for example a local area network (LAN) connection, a universal serial bus (USB) connection or an optical network connection, or the like; or a wired Internet connection. Communication interface 808 may comprise, or be configured to be coupled to, at least one antenna to transmit and/or receive radio frequency signals. One or more of the various types of connections may be also implemented as separate communication interfaces, which may be coupled or configured to be coupled to one or more of a plurality of antennas.

Apparatus 800 may further comprise a user interface 810 comprising an input device and/or an output device. The input device may take various forms such a keyboard, a touch screen, or one or more embedded control buttons. The output device may for example comprise a display, a speaker, a vibration motor, or the like.

When apparatus 800 is configured to implement some functionality, some component and/or components of apparatus 800, such as for example the at least one processor 802 and/or the at least one memory 804, may be configured to implement this functionality. Furthermore, when the at least one processor 802 is configured to implement some functionality, this functionality may be implemented using the program code 806 comprised, for example, in the at least one memory 804. Program code 806 is provided as an example of instructions which, when executed by the at least one processor 802, cause performance of apparatus 800.

The functionality described herein may be performed, at least in part, by one or more computer program product components such as software components. According to an embodiment, the apparatus comprises a processor or processor circuitry, such as for example a microcontroller, configured by the program code when executed to execute the embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), application-specific Integrated Circuits (ASICs), application-specific Standard Products (ASSPs), System-on-a-chip systems (SOCs), Complex Programmable Logic Devices (CPLDs), Graphics Processing Units (GPUs).

Apparatus 800 may comprise for example a computing device such as for example am access node, a base station, a server, a mobile phone, a tablet computer, a laptop, an internet of things (IoT) device, or the like. Examples of IoT devices include, but are not limited to, consumer electronics, wearables, sensors, and smart home appliances. In one example, apparatus 800 may comprise a vehicle such as for example a car. Although apparatus 800 is illustrated as a single device it is appreciated that, wherever applicable, functions of apparatus 800 may be distributed to a plurality of devices, for example to implement example embodiments as a cloud computing service.

FIG. 9 illustrates an example of a method for random access.

At 901, the method may comprise estimating a location of an apparatus.

At 902, the method may comprise determining a quality of the estimated location.

At 903, the method may comprise determining, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network.

At 904, the method may comprise transmitting a plurality of random access preambles corresponding to the plurality of frequency pre-compensation values.

Further features of the method directly result from the functionalities and parameters of UE 110, satellite 120, or in general apparatus 800, as described in the appended claims and throughout the specification, and are therefore not repeated here. Different variations of the method may be also applied, as described in connection with the various example embodiments.

An apparatus may be configured to perform or cause performance of any aspect of the method(s) described herein. Further, a computer program or a computer program product may comprise instructions for causing, when executed, an apparatus to perform any aspect of the method(s) described herein. Further, an apparatus may comprise means for performing any aspect of the method(s) described herein. In one example, the means comprises the at least one processor 802, the at least one memory 804 storing instructions that, when executed by the at least one processor 802, cause apparatus 800 to perform the method.

Any range or device value given herein may be extended or altered without losing the effect sought. Also, any embodiment may be combined with another embodiment unless explicitly disallowed.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the embodiments described above may be combined with aspects of any of the other embodiments described to form further embodiments without losing the effect sought.

The term 'comprising' is used herein to mean including the method, blocks, or elements identified, but that such blocks or elements do not comprise an exclusive list and a method or apparatus may contain additional blocks or elements.

As used in this application, the term 'circuitry' may refer to one or more or all of the following: (a) hardware-only circuit implementations (such as implementations in only analog and/or digital circuitry) and (b) combinations of hardware circuits and software, such as (as applicable):(i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation. This definition of circuitry applies to all uses of this term in this application, including in any claims.

As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus, comprising:
means for estimating a location of the apparatus;
means for determining a quality of the estimated location;
means for determining, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network; and
means for transmitting a plurality of random access preambles corresponding to the plurality of frequency pre-compensation values.

2. The apparatus according to claim 1, further comprising:
means for determining, based on the location of the apparatus, a single frequency pre-compensation value and transmitting a single random access preamble corresponding to the single frequency pre-compensation value, in response to determining that the quality of the estimated location does not meet the condition for applying multiple frequency pre-compensation values for accessing the non-terrestrial network.

3. The apparatus according to claim 1 or claim 2, further comprising:
means for estimating the location of the apparatus based on at least one satellite positioning signal and/or at least one terrestrial positioning signal.

4. The apparatus according to claim 3, wherein the at least one satellite positioning signal is received from a serving satellite of the non-terrestrial network and/or at least one other satellite.

5. The apparatus according to claim 4, further comprising:
means for determining the quality of the estimated location based on downlink information received from the serving satellite and/or measurements of at least one downlink signal received from the serving satellite.

6. The apparatus according to claim 5, further comprising:
means for determining the quality of the estimated location based on at least one of:
variance of time information, frequency information, or location information determined based on the at least one satellite positioning signal;
a number of satellites used for determining the time information, frequency information, or the location information;
variance of the downlink information; or
downlink radio channel conditions associated with the at least one downlink signal.

7. The apparatus according to any of claims 1 to 6, further comprising:
means for transmitting a subsequent random access preamble of the plurality of random access preambles, in response to not receiving a random access response within a predetermined time period from transmission of a previous random access preamble, or
means for transmitting the plurality of random access preambles before an expected reception time of a random access response.

8. The apparatus according to claim 7, wherein at least two of the plurality of random access preambles overlap in time and/or wherein the plurality of random access preambles comprise same preamble sequence.

9. The apparatus according to any of claims 1 to 8, wherein the condition for applying the plurality of frequency pre-compensation values for accessing the non-terrestrial network comprises the quality of the estimated location being above or equal to a first threshold, the apparatus further comprising:
means for determining a reference frequency offset based on a signal received from the non-terrestrial network when the quality of the estimated location is above or equal to a second threshold;
means for determining a current frequency offset based on a signal received from the non-terrestrial network when the quality of the estimated location is below or equal to the first threshold;
means for determining a current Doppler shift based on a subtraction of the reference frequency offset and the current frequency offset; and
means for determining the plurality of frequency pre-compensation values based on the current Doppler shift.

10. The apparatus according to claim 9, wherein the first threshold is equal to the second threshold or wherein the first threshold is lower than the second threshold.

11. The apparatus according to claim 9 or claim 10, further comprising:
means for determining a first frequency pre-compensation value based on the location of the apparatus; and
means for selecting the plurality of frequency pre-compensation values from an interval between the first frequency pre-compensation value and a second frequency pre-compensation value corresponding to the current Doppler shift.

12. The apparatus according to any of claims 9 to 11, further comprising:
means for determining a next frequency pre-compensation value of the plurality of frequency pre-compensation values based on a weighted average of a previous frequency pre-compensation value and a predetermined change of the frequency pre-compensation value.

13. The apparatus according to any of claims 9 to 11, further comprising:
means for estimating a direction and/or an amount of change of the current Doppler shift;
means for determining a next frequency pre-compensation value of the plurality of frequency pre-compensation values based the direction and/or the amount of change of the current Doppler shift.

14. A method, comprising:
estimating a location of an apparatus;
determining a quality of the estimated location;
determining, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network; and
transmitting a plurality of random access preambles corresponding to the plurality of frequency pre-compensation values.

15. A computer program comprising instructions for causing an apparatus to perform at least the following:
estimating a location of the apparatus;
determining a quality of the estimated location;
determining, based on the location of the apparatus, a plurality of frequency pre-compensation values for accessing a non-terrestrial network, in response to determining that the quality of the estimated location meets a condition for applying multiple frequency pre-compensation values for accessing the non-terrestrial network; and
transmitting a plurality of random access preambles corresponding to the plurality of frequency pre-compensation values.
